# EUROPEAN PATENT SPECIFICATION

(11) **EP 2 962 440 B1**
(45) Date of publication and mention of the grant of the patent: **04.01.2017**
(21) Application number: 14712392.1
(22) Date of filing: 26.02.2014
(51) Int. Cl.: H04L 29/06, G06F 21/33, H04L 9/08, H04L 29/08

(54) **REAL-TIME COMMUNICATIONS USING A RESTLIKE API**
ECHTZEITKOMMUNIKATION UNTER VERWENDUNG EINES RESTLIKE API
COMMUNICATIONS EN TEMPS RÉEL EMPLOYANT UNE API RESTLIKE

(30) Priority: 28.02.2013 US 201361771073 P; 26.06.2013 US 201313927116
(43) Date of publication of application: 06.01.2016
(73) Proprietor: Microsoft Technology Licensing, LLC, Redmond, WA 98052 (US)
(72) Inventor: TAINE, Stephane, Redmond, Washington 98052-6399 (US); RAO, Deepak, Redmond, Washington 98052-6399 (US); YOUNIS, Shahzaib, Redmond, Washington 98052-6399 (US); GANESAN, Krishnamurthy, Redmond, Washington 98052-6399 (US); EDELSBURG, Alex, Redmond, Washington 98052-6399 (US)
(74) Representative: Driver, Virginia Rozanne
(86) International application number: PCT/US2014/018459
(87) International publication number: WO 2014/134081

(56) References cited:
- WO-A1-2008/103196
- WO-A1-2010/042733
- US-A1- 2012 185 561
- US-B1- 7 647 329
- CASTELLANI UNIVERSITY OF PADOVA S LORETO ERICSSON A: "Best Practice to map HTTP to COAP and viceversa; draft-castellani-core-http-coap-mapping-00 .txt", BEST PRACTICE TO MAP HTTP TO COAP AND VICEVERSA; DRAFT-CASTELLANI-CORE-HTTP-COAP-MAPPING-00 .TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 January 2011 (2011-01-25), pages 1-20, XP015073659, [retrieved on 2011-01-25]

## Description

### RELATED APPLICATION

This application claims priority to United States Provisional Patent Application No. 61/771,073, filed February 28, 2013, and entitled "UNIFIED COMMUNICATIONS TECHNOLOGIES," the entirety of which is incorporated herein by reference.

### BACKGROUND

Computer-implemented Unified Communications (UC) applications enable users thereof to receive and transmit real-time communications by way of a plurality of differing communications modalities. For instance, an exemplary UC application can be configured to support instant messaging, voice communications, teleconferencing, video conferencing, voicemail retrieval, calendar syncing, and content sharing, amongst other communications modalities.

Traditionally, signaling of endpoints with client-side instances of a UC application installed thereon has been powered by dedicated, proprietary, and standard protocols (session-based, command and control, or hop-by-hop), such as SIMPLE, SIP, H.323, XMPP, Jingle, Skinny, and the like. Each of these protocols has been fine-tuned to address a respective aspect of communications supported by the UC application; for example, a first protocol can be employed for telephone call set-up, a second protocol can be employed for setting or subscribing to presence of an individual, etc. A consequence of this approach is that client-side instances of conventional UC applications are relatively complex, as core logic is pushed to such client-side instances (referred to herein as "clients"). Effectively, then, clients act as respective coordination points of various signaling flows - if a client is unable to support a certain protocol, it may not be considered by users to be a full-fledged UC application. In an example, conventional web-based clients support instant messaging and presence, but not enterprise-wide voice and video communications, and thus may not be considered a full-fledged UC application by users.

Several deficiencies are associated with conventional UC applications due to the architecture described above. First, evolution of light-weight clients is difficult, as remote procedure call protocols are relatively inflexible to change, as such protocols force an explicit or implicit coupling (tight coupling) between clients and corresponding code executing on servers. Thus, if new features are added to the UC application, legacy clients may become inoperable. Further, the conventional approach is associated with a high memory footprint, chattiness, and high bandwidth utilization. A Remote Procedure Protocol (RPC) adopted to power conventional web-based clients in UC applications can cause server-side code (referred to herein as "servers") to often synchronize 100% of a client state, even when a user interface of the client needs a relatively small amount of information. Moreover, such approach is associated with a lack of standard/monitoring tools, as the above-noted RPC employs the hypertext transfer protocol (HTTP) as a transport layer, with one Unified Resource Locator (URL) representing the service - this results in a lack of standard tools to monitor health of the UC application.

WO 2010/042733 discloses a method of managing the connections between a client, and intermediary application and a server, so that asynchronous messages can be transmitted over HTTP from the server to the client.

US 7,647,329 discloses a keymap service architecture for a distributed storage system. The system implements storage nodes configured to store replicas of data objects, where each of the replicas is accessible via a respective locator value, and keymap instances each configured to store keymap entries corresponding respectively to the data objects.

### SUMMARY

The following is a brief summary of subject matter that is described in greater detail herein. This summary is not intended to be limiting as to the scope of the claims.

Various technologies pertaining to an application programming interface (API) that generally complies with a representational state transfer (REST) architecture are described herein. Such an API, when employed by a UC application, provides support for synchronous communications (e.g., Voice-Over-IP (VoIP), video conferencing, application sharing, data collaboration, ...). Additionally, the UC application can also support asynchronous communications (e.g., online meeting scheduling, presence, and synchronizing contacts and group information, ...). Additionally, the UC application utilizing the API described herein can facilitate asynchronous and synchronous communications in real-time (on the order of milliseconds or less).

In an exemplary embodiment, such application can be a unified communications (UC) application. A system architecture that supports such an application includes client computing devices in communication with server computing devices, where the client computing devices execute client-side instances of the application (clients) and the server computing devices execute server-side code (servers). The client computing devices may include desktop computing devices as well as portable computing devices such as mobile telephones, tablets (slates), phablets, wearables, etc. In accordance with aspects described herein, real-time synchronous and asynchronous communications between clients and/or between a client and a server can be accomplished through employment of an API that conforms to the REST architecture (e.g., a RESTlike API).

The API is modeled in terms of identifiers and commands, where the identifiers represent resources and the commands represent methods of interacting with resources, such as conventional hypertext-transfer-protocol (HTTP) methods. The UC application can transmit data by way of the API using a variety of payload formats, such as conventional hypermedia types. A resource can be or include data, such as a document, image, database entry, etc. In another example, a resource can be or include computer-executable code, such as a service, an executable thread, etc. Furthermore, resources generally pertain to a particular concept described by their respective identifiers. For example, a "contacts" resource can include a list of contacts of a user, or can be a service that retrieves the list of contacts from other resources. Each resource is identified by a respective global identifier, such as a universal resource locator (URL) that can be used by the client to access a respective resource. Resources can also comprise global identifiers of other resources, so as to indicate a link-relation. For example, the "contacts" resource can also comprise a global identifier of a "profile" resource that comprises a profile of a contact of the user. The client, after accessing the "contacts" resource and locating the global identifier for the "profile" resource, can then use the global identifier for the "profile" resource to retrieve the profile of the contact. Such link-relations can allow a client to navigate through resources in a manner that is similar to how a user can navigate through webpages using hyperlinks.

Thus, an exemplary APIs employed by a UC application can use link-relations to express capabilities supported by the UC application, wherein the use of link-relations conforms to the HATEOAS (Hypertext as the engine of application state) principle. New capabilities can be introduced by adding new link-relations.

As noted above, the commands represent respective methods of interacting with resources. Exemplary methods include retrieving data from a resource, adding data to a resource, replacing or adding a resource, and deleting a resource. By combining an identifier and a command in a request, a client can indicate a resource that is desirably accessed as well as an operation that is desirably executed. For example, in order to retrieve a list of contacts of a user, a client can generate a request that includes a command representing a retrieval operation and an identifier representing the "contacts" resource.

It may be desirable, however, to add, modify, or delete resources supported by the server, and accordingly it may be desirable to update clients. Thus, in an example, a client can send a "hanging request" to the server for events (e.g., a listing of updates to resources), where a hanging request is one to which the server need not immediately reply. For example, rather than replying that no new updates to resources used by the client are available, the server can wait until an update occurs to generate/transmit a reply.

The server can additionally leverage an eventing framework to aggregate events and updates to resources on the server and determine how and when notifications of such updates are delivered to the client. Rather than sending all such updates, e.g., synching 100% of the state, the server can transmit metadata to the client that describes updates that are available, and the client can request desired updates. In an exemplary embodiment, the server can assign each event/update a category, wherein exemplary categories include real-time sensitive, high urgency, and low urgency.

When an update is real-time sensitive, the server can embed the update into the metadata transmitted to the client, allowing the client to receive the real-time sensitive update without having to determine that the update is needed, make a request to the server, and wait for the update to be received, thereby reducing latency for delivering real-time sensitive updates. High urgency updates can be indicated in the metadata, and the client can choose when to request delivery of such updates from the server. Updates can be retrieved eagerly (e.g., relatively quickly), lazily (when convenient or when a cost of retrieving the update is below a threshold), or an update may be ignored. Low urgency updates can be aggregated and withheld by the server until either a predetermined time period has passed (e.g., until the hanging request expires) or until the low-urgency update becomes of higher urgency. With respect to early retrieved updates, provision of a high urgency update can be delayed for a relatively short period of time (e.g., on the order of 50 ms) to allow for aggregation of high urgency updates.

Further, an application can incorporate an asynchronous operation, wherein one or more endpoints and/or a server need not operate concurrently. For example, in electronic messaging, a receiver need not be active for a sender to send a message. An asynchronous operation may be initiated by a client, such as a sender desiring to send a message, or by a server, such as when the server desires to deliver updates to files that are shared between multiple clients working asynchronously. Because portions of the asynchronous operation may occur at different locations (e.g., at the client or server), and because such portions may occur at different times, a resource may persist on the server after a client's request has been completed. In a conventional (e.g., stateless) REST architecture, the persisting resource may not be served to the client in a subsequent request However, by leveraging the RESTlike API, the client, by requesting to perform such the asynchronous operation, can cause the server to create an operational resource that can keeps the client updated as to the progress of the asynchronous operation while still respecting the HATEOAS principle.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Figs. 1 and 2 are functional block diagrams of respective exemplary systems that facilitate executing an application that supports bi-directional real-time synchronous communication through use of a RESTlike API while also supporting asynchronous communication.
Fig. 3 is a functional block diagram of an exemplary system that facilitates executing an application that supports an asynchronous operation through use of a RESTlike API.
Figs. 4-9 are flow diagrams that illustrate respective exemplary methodologies for bi-directional real-time asynchronous and synchronous communication through use of a RESTlike API.
Fig. 10 is flow diagram that illustrates an exemplary methodology for bi-directional communications for an asynchronous operation through use of a RESTlike API.
Fig. 11 is an exemplary computing system.

### DETAILED DESCRIPTION

Various technologies pertaining to real-time communications between computing devices through use of an API that conforms to representational state transfer (REST) architecture are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something, and is not intended to indicate a preference.

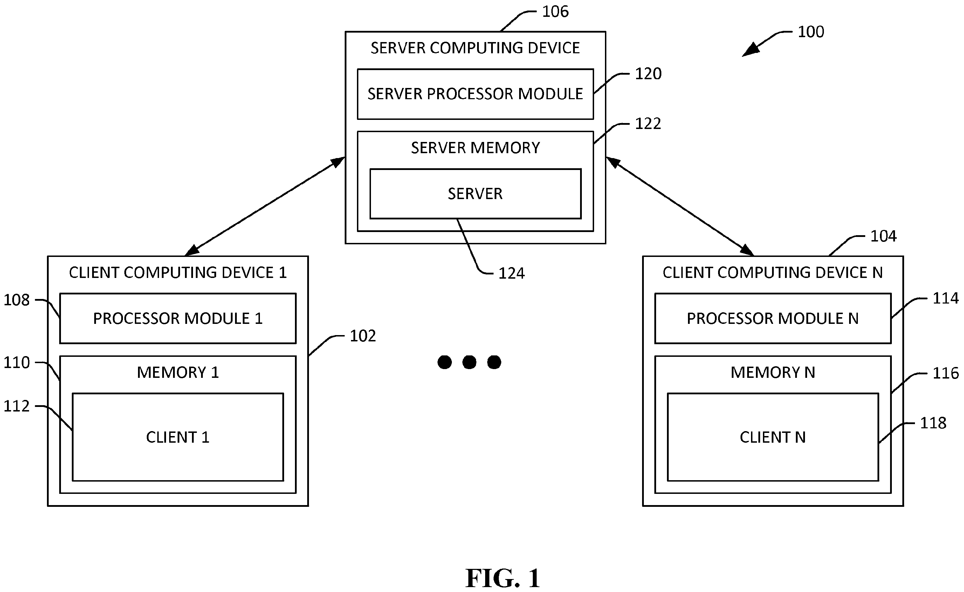

With reference now to Fig. 1, an exemplary system 100 that facilitates real-time synchronous and asynchronous communications between computing devices is illustrated. The system 100 includes a plurality of client computing devices 102-104. The client computing devices 102-104 can include desktop computing devices, laptop computing devices, netbooks, ultrabooks, tablets (slates), phablets, mobile telephones, etc. The system 100 further includes a server computing device 106, which is in communication with the client computing devices 102-104 by way of suitable respective network connections. Additionally, communications channels can be established directly between computing devices in the client computing devices 102-104 to facilitate communications therebetween.

The client computing devices 102-104 and the server computing device 106 are configured to support synchronous and asynchronous real-time communications therebetween by way of a communications application distributed between the client computing devices 102-104 and the server component device 106. With more particularity, the first computing device 102 includes a first processor module 108 that executes instructions retained in a first memory 110. The first memory 110 can include a first client-side instance of a communications application, referred to as a first client 112. Similarly, the *N*th computing device 104 can include an *N*th processor module 114 that is configured to execute instructions in an *N*th memory 116. The *N*th memory 116 includes an *N*th client-side instance of the communications application, referred to as an *N*th client 118.

While the server computing device 106 is depicted as a single device in Fig. 1, the server computing device 106 may be a plurality of server computing devices (e.g., a distributed server) and may be or comprise one or more virtual machines. The server computing device 106 includes a server processor module 120 that is configured to execute code in a server-side memory 122. For example, the server-side memory 122 can include server-side code of the communications application, wherein the server-side code is configured to support at least one communications modality of the communications application. The server-side code is referred to herein as a server 124. For example, the server 124 can support instant messaging between client computing devices, maintenance and provision of presence information to client computing devices, etc.

The communications application distributed between the client computing devices 102-104 and the server component device 106 can support real-time asynchronous communications and real-time synchronous communications between computing devices. Real-time asynchronous communication refers to transmittal of data to a recipient device (e.g., one of the client computing devices 102-104) at times or intervals that are unknown to the recipient device. For example, an asynchronous communication can be at least one of a file transfer, an electronic message (e.g., email, instant message, ...), an event scheduling request, a presence indication, an update to a list of contacts or groups, etc. Synchronous communication refers to when both a sender and recipient are communicating and are synchronized with one another, although in some instances synchronization may be approximate. For example, synchronous communication can include video streaming, video conferencing, voice communication, application sharing between computing devices, desktop sharing, etc.

In an exemplary embodiment, the communications application distributed between the client computing devices 102-104 and the server computing device 106 can be a unified communications (UC) application that supports multiple communications modalities, including at least one of the synchronous and asynchronous modalities referenced above. In another example, the communications application can be or be included in a social networking application that supports instant messaging, presence, and groups. In still yet another example, such communications application can be an instant messaging application that supports instant messaging, presence, and voice communications. Other types of communications applications are also contemplated.

The clients 112-118 and the server 124 can use a RESTlike API to communicate synchronously in real-time. To that end, the client 112 can cause a graphical user interface (GUI) to be displayed that includes, for example, contacts for a user of the client 112, messages received by the client 112, etc. The server 124 can access, for example, a listing of contacts of the user, messages sent and received via the client 112, and other data in order to, for example, populate the user interface. When, for instance, the user of the first client computing device 102 seeks to send a communication to a contact (e.g., the user of the *N*th client computing device 104), the first client 112 can communicate with the *N*th client 118 *via* the server 124 or *via* a channel established by the server 124. The server 124, in addition to routing the communication, can also send other information to the first client 112, such as that the contact is available to communicate in real-time.

As will be described in greater detail herein, the RESTlike API is modeled in terms of identifiers and commands, where the identifiers represent resources stored in the server memory 122, and the commands represent methods of interacting with resources, such as conventional hypertext-transfer-protocol (HTTP) methods and hypermedia types. A resource can be or include data, such as a document, an image, etc. Additionally, a resource can be or include a computer-executable service or other computer-executable instructions. Further, a resource can be or include a combination of data and computer-executable instructions. Additionally, each resource can be directed towards a respective concept described by its identifier. For example, a "contacts" resource can include a list of contacts of a user. Each resource is identified by a respective global identifier, such as a universal resource locator (URL) that can be used by the client to access a respective resource. A resource can also comprise a global identifier of other another resource (or multiple resources), so as to indicate a link-relation between the resource and the another resource. For example, the "contacts" resource can also comprise a global identifier of a "profile" resource, wherein the profile resource comprises a profile of a contact of the user. The first client 112, after accessing the "contacts" resource (e.g., from the server 124) and locating the global identifier for the "profile" resource therein, can then use the global identifier for the "profile" resource to access the profile of the contact. Such link-relations can allow the first client 112 to navigate through resources in a manner that is similar to how a user can navigate through webpages using hyperlinks. Additional detail pertaining to the RESTlike API is set forth below.

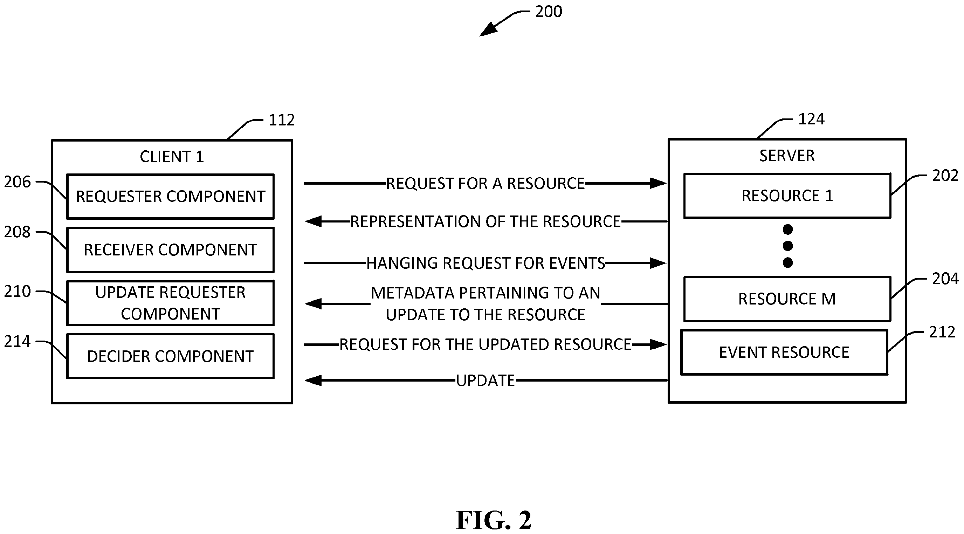

Referring now to Fig. 2, an exemplary system 200 that facilitates real-time synchronous and real-time asynchronous bi-directional communication (e.g., between a client and server or a client and client) through utilization of a RESTlike API is illustrated. The system 200 comprises the first client 112 that is in communication with the server 124 through utilization of the RESTlike API. In an alternative embodiment, the server 124 can be replaced with the *N*th client 118, such that the first client 112 and the *N*th client 118 are in direct communication with one another. The RESTlike API, as noted above, is modeled using identifiers and commands. Such identifiers and commands can be universal, in that they may be used without regard to a specific application being executed, a specific device being communicated with, or a specific operation being undertaken, and thus provide a generalized interface between devices.

Resources corresponding to the RESTlike API are now described. As shown, the server 124 can comprise or have access to a plurality of resources (e.g., a first resource 202 through an *M*th resource 204). The format of a resource is arbitrary, as a resource can be structured as a database, a file, etc. Identifiers can respective represent the resources 202-204, wherein a resource can comprise at least one of data (such as a document, an image, a database entry or entries, etc.), computer-executable code, and the like. Each resource pertains to a respective concept (e.g., which can described by an identifier for the resource). For example the first resource 202 can be a "contacts" resource, and thus may comprise a listing of contacts of a user of the first client computing device 102 that includes the first client 112. Each resource is identified by a respective global identifier, wherein a global identifier can be a universal resource locator (URL) that can be used by the first client 112 to access the resource on the server 124 corresponding to the global identifier. For instance, a global identifier for the first resource 202 can be as follows:
/messagingapp/user/contacts

A resource can also comprise global identifier(s) of other resource(s), so as to indicate a link-relation to the other resource(s). For example, the first resource 202 can comprise a global identifier for the *M*th resource 204, wherein the *M*th resource 204 is a "profile" resource and comprises a profile of a contact included in the "contacts" resource. Thus, for instance, the first resource 202 can comprise a database entry relating a contact of the user of the first client 112 (e.g., "Contact1") with a global identifier of the *M*th resource 204, wherein the *M*th resource comprises the profile of Contact1, as shown in the following example:

| Contacts | Profiles |
|---|---|
| Contact1 | /messagingapp/contact1/profile |

The resources 202-204 can include a variety of different types of resources, including but not limited to a dynamic resource, an operation resource, a sender resource, an event resource, a capability resource, a container resource, an operation factory resource, a dynamic container resource, and/or a resource that combines aspects of the aforementioned resources. A dynamic resource is one that is likely to change or be updated often, such as a presence indictor for a contact; an operational resource represents an asynchronous operation; a sender resource is configured to report updates for a group of dynamic and operation resources; an event resource comprises a batch or listing of updates grouped by sender; a capability resource represents a capability of a particular client; a container resource comprises resources of other types; an operation factory resource is a resource that can primarily be used to initiate an operation resource; a dynamic container resource comprises other resources and can generate an event when a resource is inserted, modified, or changed. It is also to be understood that a resource can comprise or combine features of the aforementioned types of resources. For instance, an operation resource may also act as a sender resource and send updates.

Methods supported by the RESTlike API (represented by commands) for interacting with resources are now described. Exemplary methods supported by the RESTlike API include conventional hypertext-transfer-protocol (HTTP) methods and hypermedia types. Thus, with more specificity, exemplary methods include a method for retrieving data from a resource (e.g., via a "GET" command), a method for adding data to a resource (e.g., via a "POST" command), a method for replacing or adding a resource (e.g., via a "PUT" command), and a method for deleting a resource (e.g., via a "DELETE" command). The first client 112 can generate a request that includes an identifier and a command, thereby identifying a resource desirably accessed and a method to be executed in connection with the resource. Accordingly, the first client 112 comprises a requester component 206 that is configured to access a resource in the resources 202-204 by sending a request to the server 124 that comprises an identification of a method (such as a method for retrieving data from a method) and an identification of a global identifier of the resource that is desirably accessed.

For example, the requester component 206, in order to retrieve the list of contacts from the "contacts" resource, can set forth the following request:
GET /messagingapp/user/contacts
where "GET" identifies the method for retrieving data, and
/messagingapp/user/contacts is a global identifier that identifies the first resource 202. Thus, rather than having to store a contacts list locally, the first client 112 can request content of the first resource 202 of the server 124. Using global identifiers and methods allows the first client 112 to make requests for a resource without having to have any knowledge as to how the resource is stored on the server computing device 106 or the way in which the server 124 implements the requested method.

Responsive to receiving the request for the first resource 202 from the first client 112, the server 124 can transmit the first resource 202 to the client 112. In another example, the server 124 can generate a data packet based upon content of the first resource 202 and transmit such data packet to the first client 112. For example, such data packet may be smaller in size when compared to the first resource 202 itself. Additionally, the data packet may be in a format that is more readily parsed by the first client 112 when compared to the format of the first resource 202. In another example, where a resource is a service or comprises executable code, the data packet can comprise data that represents the service or executable code. Additionally, the data packet can be in a format that is recognizable to the client.

Accordingly, rather than returning the first resource 202 identified in the request set forth by the requester component 206, the server 124 can generate and return a data packet based upon content of the first resource 202, wherein such data packet can be or include a document, a listing, or the like, and may be in a structured file format such as a markup file (e.g., XML) or an object notation file (e.g., JSON). For example, a data packet that can be generated by the server 124 based upon a resource can be a JSON representation of a database that includes a contacts list, such as follows:

```
var ContactsList = [
              {"name": "Contact1", "profile": "/messagingapp/contact1profile."}
      ]
```

The first client 112 further comprises a receiver component 208 that receives data transmitted to the first client 112 from the server 124, such as the first resource 202 or the data packet based thereon, which can be stored in a cache that is accessible to the first client 112.

In an exemplary embodiment, as indicated above, the first resource 202 include a list of contacts of a user of the first client 112, and can further include a global identifier of the *M*th resource 204, where the *M*th resource 204 includes a profile of a contact in the list of contacts of the first resource 202. Thus, responsive to receiving the first resource 202 or a data packet corresponding thereto, the first client 112 can identify the global identifier of the *M*th resource. The requester component 206 can then transmit a request to retrieve the *M*th resource 204 (or data included therein) from the server 124 (e.g., using the "GET" command and the global identifier for the *M*th resource 204). Effectively, then, the first resource 202 is linked to the *M*th resource 204 via a link-relation. Link-relations between the resources 202-204 allow the first client 112 to navigate through resources similarly to how a user can navigate through web pages using hyperlinks.

The first resource 202 (including the list of contacts of the user of the first client 112) may not exist prior to the server 124 receiving the request for such first resource 202. In such a case, the server 124 can gather data needed to generate the first resource 202 responsive to receiving the request, and can thereafter transmit the first resource 202 (or a corresponding data packet) to the first client 112. It is to be understood, however, that the first client 112 need not have knowledge of how/when requested resources are generated, as the RESTlike API provides a generalized interface between the first client 112 and the server 124. Therefore, the first client 112 and the server 124 can be deemed to be loosely coupled, in that the first client 112 and the server 124 need not have specific knowledge of the components or methods executed by the other.

The RESTlike API employed by the first client 112 and the server 124 can facilitate updating of the first client 112 with additional functionality (or reduced functionality). For example, a service or information offered by the server 124 may be desirably updated, and it may be further desirable to provide such updates to the first client 112.

For example, the communications application may be updated with a new feature that provides a user with a list of contacts and location data of each contact in the list of contacts. Thus, the first resource 202, which in this example comprises the list of contacts of the user of the first client 112, can be modified to include a global identifier of an *I*th resource (not shown) in the plurality of resources 202-204. The first client 112 can ignore the new link-relation, and thus the request set forth by the first client 112 for the first resource 202 remains valid. Therefore, the first resource 202 can be modified without impacting the behavior of the first client 112. In a particular example, the first resource 202 can be modified to comprise the following:

| Contacts | Profiles | Location Data |
|---|---|---|
| Contact1 | /messagingapp/contact 1 /profile. | /messagingapp/contact 1 /location. |

The server 124 can generate a data packet based upon the first resource 202 as follows:

```
      var ContactsList = [
              {
                     name": "Contact1",
                     "profile": "/messagingapp/contact1/profile",
                     "location": "/messagingapp/contact1 /location"
              }
      ]
```

Continuing with this example, the *M*th resource 204 is identified by the global identifier messagingapp/contact1/profile.html, and a request for such *M*th resource 204 remains valid. Therefore, the update on the server 124 need not affect the behavior of the first client 112.

Likewise, the first client 112 can be updated to account for changes to resources without affecting operation of the server 124. For instance, the first client 112 can be updated to contemplate the global identifier for the *I*th resource, such that the requester component 206 transmits a request for the *I*th resource upon the client 112 parsing the first resource 202 (or a data packet corresponding thereto).

Detecting these types of updates may, for example, comprise navigating through global identifiers of resources, constructing a map or graph based upon the navigating, and comparing the map or graph to a previous map or graph. The first client 112 can navigate through the global identifiers in the first resource 202, such as the global identifiers of the *I*th resource and *M*th resource 204, and can similarly navigate through any global identifiers comprised by the *I*th resource and *M*th resource 204. Such navigation can be repeated for additional resources identified by additional global identifiers. The navigation through such global identifiers can then be mapped or graphed, and the map or graph can be compared to a previous map or graph in order to detect changes.

Updates to the client 112 and/or the server 124 need not be implemented in a particular sequence or at a particular time, as the RESTlike API has high forwards and backwards compatibility between clients and servers. Thus, functionality supported by clients and servers in the distributed communications application can evolve independently without breaking or becoming unusable together. This type of behavior is particularly well-suited for relatively large distributed architectures, where it is not possible to redeploy an entire programming environment every time supported functionality changes.

Additionally, the resources 202-204 on the server 124 may be modified or changed. In an example, the first client 112 can request a resource from the server 124, and the server 124 can generate a respective response each time a request from the first client 112 is received. Frequent requests, however, can negatively impact real-time communications. Accordingly, an eventing framework can be used in connection with determining when and how the first client 112 is informed about updates to respective resources, as well as when and how such updates are delivered from the server 124 to the first client 112. To that end, the first client 112 can comprise an update requester component 210 that is configured to transmit a request to the server 124 that is configured to retrieve identifications of available updates to one or more of the resources 202-204. In an example, the server 124 can comprise or have access to an event resource 212, which is configured to cause the server 124 to identify categories assigned to updates and transmit identities of updates (or updates themselves) to the first client 112. For example, categories that can be assigned to updates can 1) include real-time sensitive; 2) high priority; or 3) low priority. As will be described in greater detail below, the event resource 212 can cause the server 124 to immediately transmit real-time sensitive updates to the first client 112, can cause the server 124 to immediately notify the first client 112 of an available high priority update, and can cause the server 124 to notify the first client 112 of available low priority updates when any one of 1) a real-time sensitive update is identified; 2) a high priority update is identified; or 3) the hanging request for the event resource 212 expires (e.g., 30 seconds, 45 seconds, 60 seconds).

Use of hanging requests reduces chattiness in communications between the first client 112 and the server 124, as replies from the server 124 to the first client 112 will be less frequent. The update requester component 210 can be configured to transmit hanging requests periodically or upon receipt of a reply to a hanging request (e.g., such that at least one request for the event resource 212 is always active when the first client 112 is being executed.

As noted above, the server 124 can assign a respective category to each update identified in the event resource 212, where categories include real-time sensitive, high urgency, or low urgency. When the event resource 212 identifies an update that is assigned a real-time sensitive category, the server 124 can immediately generate a reply to the hanging request from the first client 112, wherein the update is included in the reply. Responsive to the receiver component 208 of the first client 112 receiving the reply, the update requester component 210 can transmit another hanging request (e.g., a hanging GET) for the event resource 212 to the server 124. Accordingly, real-time sensitive updates to resources are received at the first client 112 in real-time, as such updates are identified at the server 124. Additionally, responsive to a high urgency update being identified in the event resource 212, the server 124 can generate a reply to the hanging request received from the first client 112, where the high urgency update is identified to the first client 112 in the reply, but the update itself is not included in the reply. The first client 112, responsive to receiving the identification of the high urgency update, can request the update from the server 124 (e.g., where the request identifies the resource to be updated). For updates categorized as being low urgency, the event resource 212 can aggregate such updates, wherein the server 124 transmit a reply to a hanging request when the hanging request expires or when a low urgency update is changed to a high urgency update. The reply generated by the server 124 identifies available updates, but does not include the updates in the reply.

With more specificity, as indicated above, available updates to one of more of the resources 202-204 (e.g., low urgency updates) can be aggregated in the events resource 212. Thus, when one of the resources 202-204 is updated, the server 124 causes information pertaining to such an update to be included in the events resource 212. Exemplary updates to the resources 202-204 include addition of a resource to the resources 202-204, modification of data in a resource of the resources 202-204 (e.g., relative to a prior state of the resource), deletion of a resource from the resources 202-204, etc. Thus, if the first resource 202 is modified to include a reference to the *I*th resource, information pertaining to such modification is included in the event resource 212.

Thus, the event resource 212 may include an identification of at least one update (or several low urgency updates) that is available to the first client 112. Accordingly, the event resource 212 may include a list of events that identify available updates, a respective type of update for an event, and a respective global identifier for the resource being updates. Exemplary data included in the event resource 212, then, can be as follows:

| Events | ID of Resource Updated | Update Type |
|---|---|---|
| Update1 | /messagingapp/user/contactslist | modification |
| Next Event Batch | /messagingapp/nextevents | new resource |

When an update is categorized as being real-time sensitive, it is desirable for the first client 112 to receive the update as soon as possible (e.g., in real-time). Thus, when an update is categorized as being real-time sensitive by the server 124, the update may be included in the reply transmitted to the client 112 by the server 124 when responding to the hanging request for the event resource 212 - thus, the update is available to the first client 112 immediately upon the server 124 recognizing the update. Similarly, when the event resource 212 includes data that indicates that a particular update is categorized as being of high urgency, the server 124 can reply to a hanging request for the event resource 212 with metadata that indicates that the update is available to the client 112 (without providing the update itself). The reply may be delivered to the client 112 through a VoIP socket, for instance.

Updates categorized as being low urgency, however, need not be delivered to the first client 112 right away. Instead, identification low urgency updates can be aggregated in the event resource 212 for a threshold amount of time, or until urgency of an update is changed (e.g., from low urgency to high urgency). Such aggregation can positively impact communications between the first client 112 and the server 124. For example, if another resource is added and then updated, what may have been two separate updates can be aggregated together. Not only can this simplify processing for the first client 112, as the another resource need only be requested and processed once, but also the chattiness of the application can be reduced, as multiple requests and/or updates are reduced to a single communication for the aggregated updates.

It can also be appreciated that high urgency and low urgency updates may also be embedded into the reply to the hanging request. For example, the size of an update may be small and would not have a negative impact on transmitting the reply. In another example, the total number of available updates may be low, such that transmitting the update rather than waiting for a request is more efficient.

The reply from the server 124 to a hanging request from the first client 112 can include metadata that comprises an indication of a type of the update and a global identifier of a resource that has been updated. Exemplary metadata in the form of an XML file that can be transmitted from the server 124 to the client 112 when the server replies to a hanging request for the event resource 212, and an update is not a real-time sensitive update, can be as follows:

```
      <EVENTS>
              <UPDATE1>
                    <ID> /messagingapp/user/contactslist </ID>
                    <TYPE>modification</TYPE>
              </UPDATE1>
              <NEXTEVENTSID> /messagingapp/nextevents</NEXTEVENTSID>
      </EVENTS>
```

For updates categorized as being high or low urgency, the first client 112 can analyze the reply from the server 124 and identify updates that are desirably retrieved from the server 124. The first client 112 can then transmit a request to the server 124 for at least one desired update. Responsive to the request, the server 124 provides the update to the first client 112.

As noted above, the receiver component 206 of the client 112 receives the reply from the server 124, responsive to receipt of the reply, the first client 112 transmits an acknowledgment receipt to the server 124. In some instances, this acknowledgment can also comprise another hanging request for a next batch of available updates. Because the acknowledgement also comprises a next hanging request, chattiness of the communication can be further reduced. As replies transmitted from the server 124 to the first client 112 (except for replies that include updates categorized as being real-time sensitive) include metadata but not updates, the first client 112 can determine when and how to retrieve updates, and thus can direct the server 124 to deliver only those updates for which the first client 112 is prepared to receive and/or is capable of receiving.

The first client 112 can also comprise a decider component 214 that is configured to determine a retrieval type for an update identified in a reply received from the server 124. The decider component 214 can make such determination based at least in part upon at least one of a capability of the first client 112, an urgency of the update, or a network traffic condition. For example, the first client 112 may only be able to properly receive a certain amount of data at a time, and thus cannot receive all updates that are available; the first client 112 may be designed to receive a certain number of updates at a time; or high network traffic may cause communication delays that impact the fidelity of the data or otherwise cause communication problems, bottlenecks, or errors. The retrieval type can be one of eager retrieval, lazy retrieval, or non-retrieval.

With respect to eager retrieval, the decider component 214 causes the update requester component 210 to immediately transmit a request for an update identified as being available by the server 124 to the server 124 (e.g., a request for the updated first resource 202). When the retrieval type is lazy retrieval, also referred to as opportunistic retrieval, the decider component 214 causes the update requester component 210 to transmit a request for an update identified as being available by the server 124 to the server 124 when a predefined condition is satisfied. The condition may be, for example, when a cost of retrieving the update is below a threshold; when no other updates or traffic is incoming; when a certain communications speed or bit rate is available between the first client 112 and the server 124, etc.

The decider component 214 can also determine that, for a current state of the first client 112 and/or at a current point in time, the update identified in the reply received from the server 124 is not necessary, and no request for the update is made (e.g., the retrieval type is non-retrieval). The decider component 214, however, can be configured to set a flag to indicate that a particular resource (e.g., the first resource 202) has been updated, such that when the first client 112 determines that the resource is desirably accessed, the first client 112 causes the update requester component 210 to transmit a request for the update to the resource. Responsive to receiving a request for an update, the server 124 transmits the update to the first client 112.

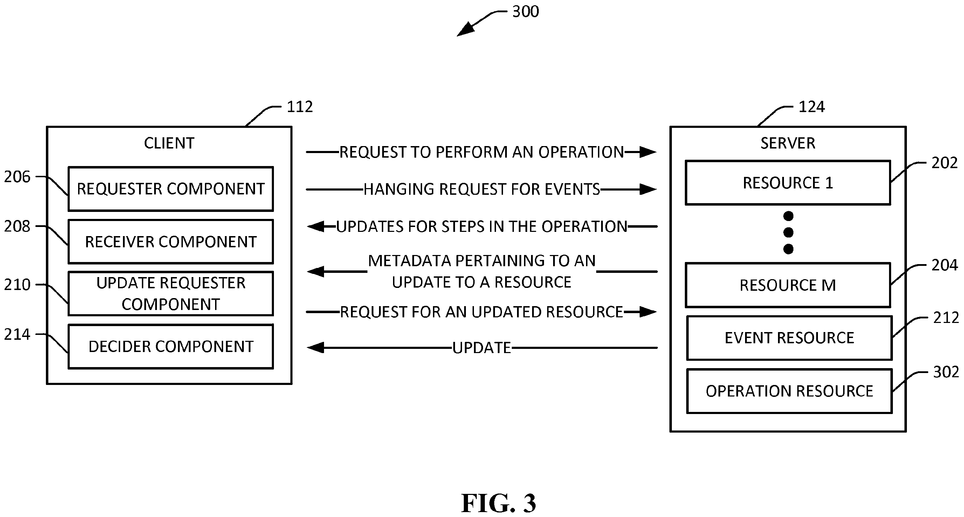

Referring now to Fig. 3, an exemplary system 300 that facilitates performing an asynchronous operation during real-time bi-directional communication between the first client 112 and the server 124 using a RESTlike API is illustrated. The system 300 comprises the first client 112 that is in real-time communication with the server 124 using the RESTlike API.

An asynchronous operation can include at least one step to be performed by at least one of the first client 112 or the server 124. For instance, an operation performed by the sever 124 to place a call through a voice communications application that can be directed to multiple clients before being accepted or declined may comprise the acts of: 1) receiving a request to make the call from the first client 112; 2) identifying an intended recipient; 3) identifying clients of the intended recipient that are available to receive the call; and 4) completing the call request. The server 124 can be configured to receive/generate an indication that a step in the operation has been performed or has failed to be performed. Further, the operation can be modeled with a framework that can cause intermediate events to be generated. For example, in order for the first client 112 to understand the status of a call (e.g., ringing, connected, or failed), events are desirably served to the first client 112 that indicate the state of the operation to the first client 112.

To that end, the first client 112 comprises the requester component 206, wherein the requester component 206 transmits a request to perform an asynchronous operation to the server 124. Responsive to receiving the request to perform the asynchronous operation, the server 124 creates an operation resource 302. The operation resource 302 can be used to model the asynchronous operation, and can further be modeled after a dedicated transient resource that follows a pattern of started, updated, and completed.

The operation resource 302, as has been described above with respect to the resources 202-204, may be accessed and interacted with using commands including methods such as the HTTP methods "GET", "PUT", "POST" and "DELETE". The operation resource 302, however, can also configured to cause the server 124 to add (in this example) the first resource 202, modify the first resource 202, or delete the first resource 202. Such adding, modifying, or deleting is based, at least in part, upon a step in the asynchronous operation. For instance, in an example where the first client 112 wishes to make a call to a contact of a user of the second client computing device 104, the request can be transmitted to the server 124, which creates the operation resource 302 responsive to receiving the request. The operation resource 302 can, for instance, create the first resource 202 to be an "available devices" resource, which comprises data that indicates devices of the contact that are capable of receiving the call.

The operation resource 302 is also configured to cause the server 124 to transmit events that represent the evolution of states of the asynchronous operation until ultimate success or failure of the asynchronous operation. As the asynchronous operation transitions towards completion, the operation resource 302 transmits high-urgency updates/events to the event resource 212, and the server 124 can transmit a reply that identifies a high-urgency update to the first client 112 as described above. For instance, when the request to make a call has been received by the server 124, the server can cause high-priority updates to be delivered to the first client 112 in order to indicate that the call is being made, and that an available device is detected. Other updates identified by the operation resource 302 can include: that the operation is starting; that the operation is in progress; and that the operation has concluded. Such update types may also comprise additional information about the state of the operation. In an example, when the update type is that the operation has concluded, the update type may additionally comprise information that the operation was, for instance, successful, or that it failed, and reasons for success or failure of the operation.

The operation resource 302 can also cause the first resource 202 to be added, modified, or deleted from the server 124. The server 124 can cause such an update to the first resource 202 to be transmitted to the event resource 212 and, like updates from the operation resource 302, the update is categorized as high-urgency. By categorizing updates pertaining to the asynchronous operation as high-urgency, the metadata about the update is immediately transmitted the first client 112, as described above. Thus, the first client 112 is kept informed about the state of the asynchronous operation without having to wait for the asynchronous operation to complete.

The client 112 further comprises the update requester component 210 that is configured to send a hanging request to the server 124 for the event resource 212, as described above. When appropriate, the server 124 generates a reply to the hanging request, in the manner set forth above with respect to the description of the system 200 in Fig. 2. As discussed above, the metadata in the reply can indicate that the first resource 202 has been updated. The update requester component 210 can then transmit a request for the update of the first resource 202 (e.g., a request for the updated first resource 202) to the server 124 using the RESTlike API. Thus, when the operation resource 302 has caused the first resource 202 to be added, modified, or deleted, the first client 112 is notified of such an update and may request such update when desired.

Responsive to the update requester component 210 requesting the update for the first resource 202, the server 124 can transmit such update, and the receiver component 208 of the first client 112 can receive such update (and, accordingly, the first client 112 is updated). It should be understood that when the operation resource 302 causes other resources to be updated, such as the first resource 202, such updates are served to the client 112 prior to the asynchronous operation completing, regardless of whether the operation successfully or unsuccessfully completes the operation. By doing so, updates to resources are delivered prior to any dynamic resources associated with the asynchronous operation being deleted.

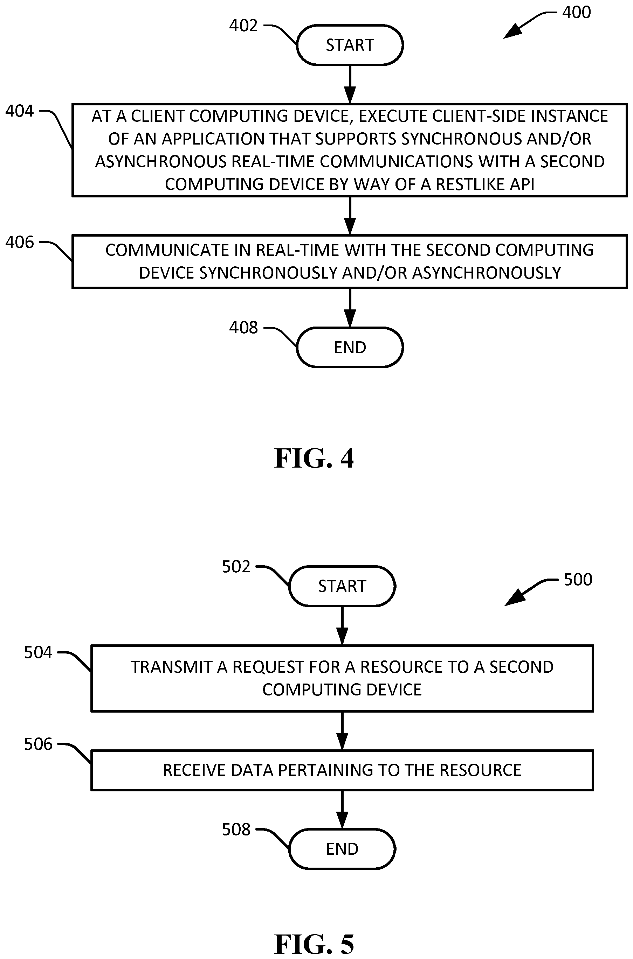

Figs. 4-10 illustrate exemplary methodologies relating to bi-directional real-time asynchronous and synchronous communication between computing devices through use of a RESTlike API. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodologies can be stored in a computer-readable medium, displayed on a display device, and/or the like.

Referring now to Fig. 4, an exemplary methodology 400 that facilitates bi-directional real-time asynchronous and synchronous communication between computing devices through use of a RESTlike API is illustrated. The methodology 400 starts at 402, and at 404 a client-side instance of an application is executed on a client computing device, wherein the application supports real-time synchronous communication and real-time asynchronous communication with a second computing device through use of a RESTlike API. At 406, the client-side instance communicates, in real-time, synchronously and/or asynchronously with the server using the API. The methodology 400 completes at 408.

Referring now to Fig. 5, another exemplary methodology 500 executed at a first computing device that facilitates communicating, in real-time, synchronously and synchronously communication with a second computing device (using a RESTlike API) is illustrated. The methodology 500 starts 502, and at 504, a request for a resource on the server is transmitted to the server, wherein the request comprises a global identifier for the resource. At 506, data pertaining to the resource is received from the server, wherein the data pertaining to the resource can be an XML file, an update for the resource, etc. The methodology 500 concludes at 508.

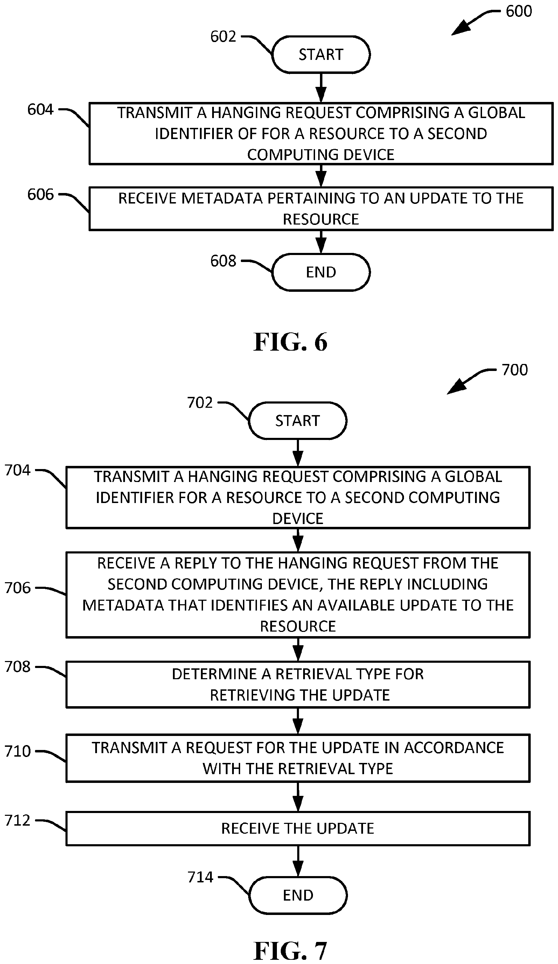

Referring now to Fig. 6, another exemplary methodology 600 executed by a first (client) computing device that facilitates communicating bi-directional in real-time with a second computing device (e.g., a server computing device) is illustrated. The methodology 600 starts at 602, and at 604, a hanging request comprising a global identifier is transmitted from the client computing device to the second computing device, the global identifier identifying a resource on the server. At 606, metadata pertaining to an update to the resource is received. The metadata can identify an update that is available for the resource, or can include the update for the resource. The methodology 600 completes at 618.

Referring now to Fig. 7, another exemplary methodology 700 executed by a first (client) computing device that facilitates communicating with a second (server) computing device, by way of a RESTlike API, bi-directionally, synchronously and asynchronously, and in real-time is illustrated. The methodology 700 begins at 702, and at 704, a hanging request comprising a global identifier for a resource is transmitted to the second computing device, wherein the global identifier identifies the resource. At 706, a reply to the hanging request is received from the first computing device, wherein the reply includes metadata that identifies an available update to the resource. At 708, a retrieval type for retrieving the update is determined, wherein the retrieval type can be one of eager retrieval, lazy retrieval, or non-retrieval. At 710, a request for the update is transmitted to the second computing device in accordance with the retrieval type determined at 710. At 712, the update is received from the server, and the methodology 700 completes at 714.

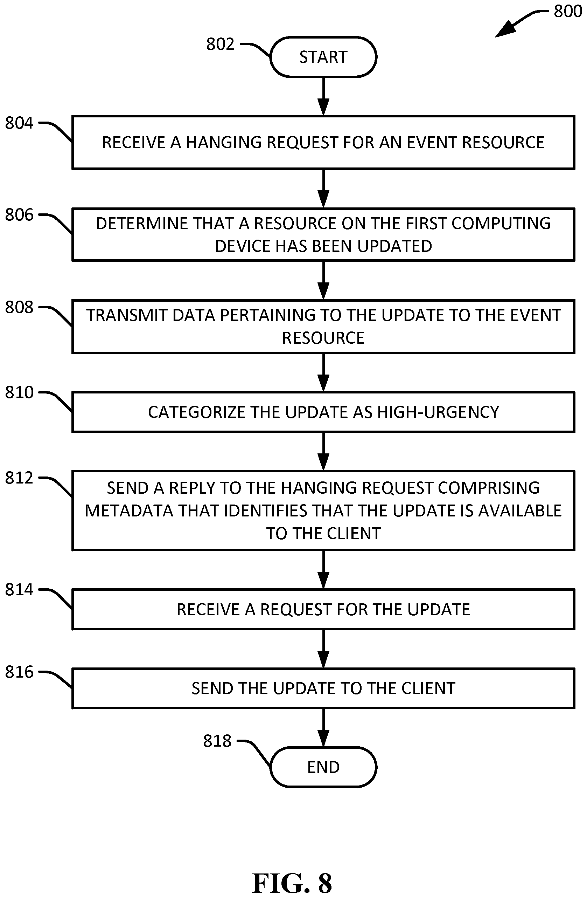

Referring now to Fig. 8, an exemplary methodology 800 that is executed by a first (server) computing device that facilitates bi-directional, real-time asynchronous and synchronous communication between the first computing device and a second (client) computing device by way of a RESTlike API is illustrated. The methodology 800 begins at 802, and at 804, a hanging request for an event resource is received, wherein the event resource is retained in a computer-readable storage medium. At 806, the server computing device determines that a resource (other than the event resource) has been updated. At 808, data pertaining to the update of the resource is sent to the event resource, and at 810, the update is categorized as high-urgency. At 812, the server computing device transmits a reply to the hanging request to the client computing device, the reply comprising metadata that identifies that the update is available. At 814, subsequent to the server computing device transmitting the reply at 812, the server computing device receives a request from the client computing device for the update. At 816, the server computing device transmits the update to the client computing device, and the methodology 800 completes at 818.

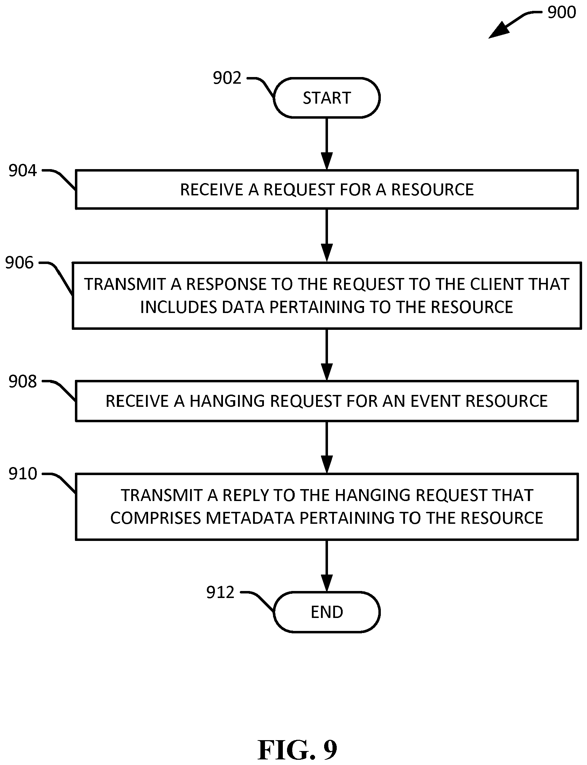

Referring now to Fig. 9, another exemplary methodology 900, executed at a server computing device, that facilitates bi-directional real-time communication between the server computing device and the client computing device is illustrated. The methodology 900 begins at 902, and at 904 a request is received for a resource on the server computing device. For instance, the request can include a global identifier for the resource. At 906, a reply to the request is transmitted to the client, where the reply comprises a data packet pertaining to the resource (e.g., data formatted in a form that can be parsed by the client computing device). At 908, a hanging request is received from the client computing device, the hanging request identifying an event resource that is used to monitor updates made to the resource. At 912, a reply to the hanging request is transmitted to the client, wherein the response comprises metadata pertaining to the resource. The methodology 900 completes at 914.

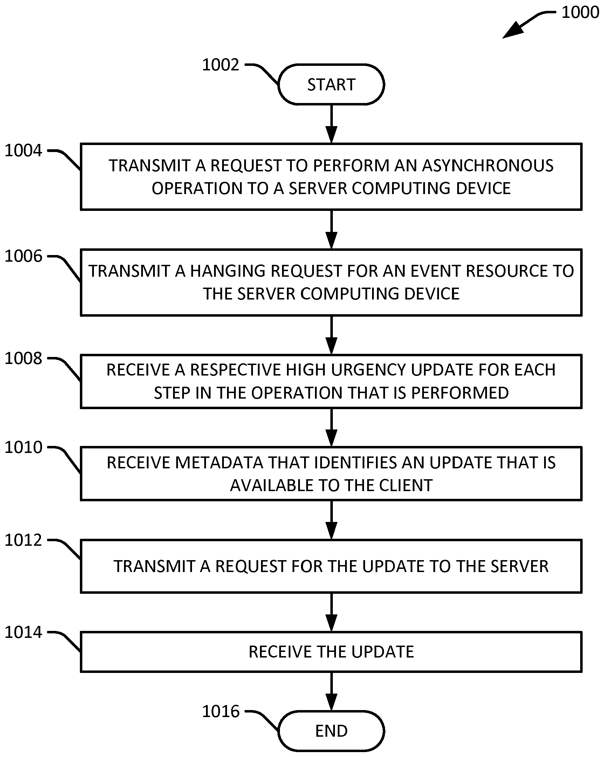

Referring now to Fig. 10, an exemplary methodology 1000 executed at a client computing device that facilitates performing an asynchronous operation with a server computing device (e.g., through use of a RESTlike API) is illustrated. The methodology 1000 starts at 1002, and 1004, a request to perform an asynchronous operation is transmitted to the server. In an example, the request can cause the server to create an operation resource for the requested asynchronous operation. At 1006, a hanging request for an event resource transmitted to the server computing device. At 1008, for each step of the asynchronous operation represented in the operation resource that is performed at the server computing device, a respective high-urgency update notification is received from the server computing device. At 1010, metadata that identifies an available update to another resource is received from the server computing device. For instance, the available update may be an update that caused by a step of the operation being performed. At 1012, a request is transmitted to the server computing device for the update, and at 1014 the update is received at the client computing device. The methodology 1000 completes at 1016.

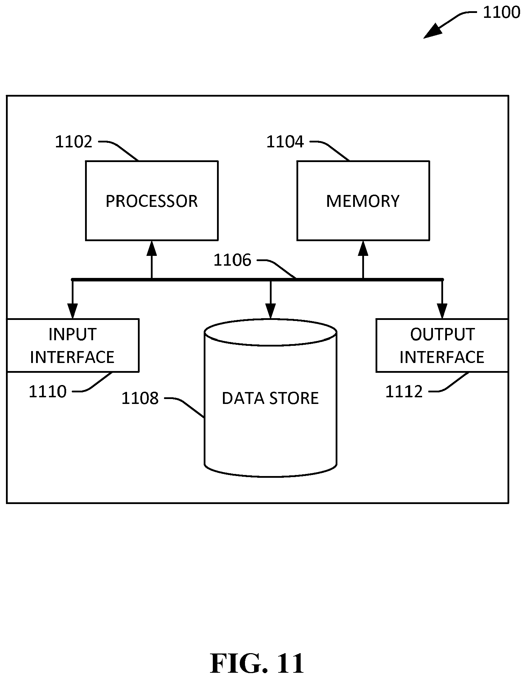

Referring now to Fig. 11, a high-level illustration of an exemplary computing device 1100 that can be used in accordance with the systems and methodologies disclosed herein is illustrated. For instance, the computing device 1100 may be used in a system that facilitates bi-directional real-time asynchronous and synchronous communication using a RESTlike API. By way of another example, the computing device 1100 can be used in a system that facilitates performing an asynchronous operation using a RESTlike API. The computing device 1100 includes at least one processor 1102 that executes instructions that are stored in a memory 1104. The instructions may be, for instance, instructions for implementing functionality described as being carried out by one or more components discussed above or instructions for implementing one or more of the methods described above. The processor 1102 may access the memory 1104 by way of a system bus 1106. In addition to storing executable instructions, the memory 1104 may also store an instance of the application, a local cache, a resource or a representation of a resource, updates, metadata pertaining to updates, or update notifications or indications.

The computing device 1100 additionally includes a data store 1108 that is accessible by the processor 1102 by way of the system bus 1106. The data store 1108 may include executable instructions, data or metadata pertaining to executing a client or server of an application, resources, API instructions or methods, etc. The computing device 1100 also includes an input interface 1110 that allows external devices to communicate with the computing device 1100. For instance, the input interface 1110 may be used to receive instructions from an external computer device, from a user, etc. The computing device 1100 also includes an output interface 1112 that interfaces the computing device 1100 with one or more external devices. For example, the computing device 1100 may display text, images, etc. by way of the output interface 1112.

It is contemplated that the external devices that communicate with the computing device 1100 via the input interface 1110 and the output interface 1112 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 1100 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 1100 may be a distributed system. Thus, for instance, several devices may be in communication by way of a network connection and may collectively perform tasks described as being performed by the computing device 1100.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc. The processor module and/or a combination of the processor module and associated memory described herein is intended to encompass any of such hardware logic components.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A computing device (102) comprising:
a processor module (108); and
a memory (110) that comprises a client-side instance of an application (112), the client-side instance of the application executed by the processor module, the client-side instance of the application supporting real-time asynchronous communication between the computing device and a second computing device (104, 106) using an application programming interface (API) that is compliant with a representational state transfer (REST) architecture;
**characterized in that**:
the client-side instance of the application also supports real-time synchronous communication between the computing device and second computing device using the API compliant with the REST architecture;
the client-side instance of the application comprises an update requester component (210) that transmits a hanging request to the second computing device for an event resource (212), the event resource comprising data pertaining to updates to resources (202-204) maintained by the second computing device, and the hanging request comprising a global identifier for the event resource;
the client-side instance of the application further comprises a receiver component (208) that receives a reply to the hanging request, wherein the reply does not comprise the update but comprises metadata based upon the data included in the event resource, the metadata comprising an indication of a type of the update and a global identifier for the resource; and
the client-side instance of the application is configured to analyze the reply to identify at least one of the updates to retrieve from the second computing device.

2. The computing device of claim 1, wherein the client-side instance of the application further comprising a decider component (214) that determines a retrieval type for the update based at least in part upon at least one of a capability of the computing device, an urgency of the update, or a network traffic condition, the decider component causes the update requester component to transmit the hanging request based upon the retrieval type.

3. The computing device of claim 2, wherein the type of the update is one of an addition of the resource on the second computing device, a modification of the resource, or a deletion of the resource from the second computing device.

4. The computing device of claim 1, the client-side instance of the application further comprising a requester component that transmits a request to perform an asynchronous operation to the second computing device using the API, wherein the request is configured to cause the second computing device to create an operation resource on the second computing device, the operation resource usable to update a resource on the second computing device based upon at least one step of the asynchronous operation, the operation resource further usable to cause the second computing device to update an event resource on the second computing device.

5. The computing device of claim 1, wherein the real-time asynchronous communication is at least one of a file transfer, an electronic message, an event scheduling request, a presence indication, an update to a contacts list, or an update to a groups list.

6. The computing device of claim 1, wherein real-time synchronous communication comprises at least one of video stream, a video conference, a voice communication, or data pertaining to application sharing.

7. A method executed by a processor module of a computing device, the method comprising:
executing a client-side instance of an application that supports real-time asynchronous communication between the computing device and a second computing device by way of an application programming interface (API) that is compliant with a representational state transfer (REST) architecture; and
asynchronously transmitting and receiving data in real-time by way of the application using said API;
**characterized in that**:
the client-side instance of the application also supports real-time synchronous communication between the computing device and second computing device using the API compliant with the REST architecture;
the method further comprises asynchronously transmitting and receiving data in real-time by way of the application using said API;
the client-side instance of the application comprises an update requester component that transmits a hanging request to the second computing device for an event resource, the event resource comprising data pertaining to updates to resources maintained by the second computing device, and the hanging request comprising a global identifier for the event resource;
the client-side instance of the application further comprises a receiver component that receives a reply to the hanging request, wherein the reply does not comprise the update but comprises metadata based upon the data included in the event resource, the metadata comprising an indication of a type of the update and a global identifier for the resource; and
the client-side instance of the application is configured to analyze the reply to identify at least one of the updates to retrieve from the second computing device.

## Patentansprüche

1. Datenverarbeitungsvorrichtung (102), die Folgendes umfasst:
ein Prozessormodul (108) und
einen Speicher (110), der eine Client-Seiten-Instanz einer Anwendung (112) umfasst, wobei die Client-Seiten-Instanz der Anwendung von dem Prozessormodul ausgeführt wird, wobei die Client-Seiten-Instanz der Anwendung eine asynchrone Echtzeit-Kommunikation zwischen der Datenverarbeitungsvorrichtung und einer zweiten Datenverarbeitungsvorrichtung (104, 106) unter Verwendung einer Anwendungsprogrammierschnittstelle ("Application Programming Interface", API) unterstützt, die mit einer Representational-State-Transfer-Architektur (REST-Architektur) konform ist;
**dadurch gekennzeichnet, dass**:
die Client-Seiten-Instanz der Anwendung auch eine synchrone Echtzeit-Kommunikation zwischen der Datenverarbeitungsvorrichtung und der zweiten Datenverarbeitungsvorrichtung unter Verwendung der API unterstützt, die mit der REST-Architektur konform ist;
die Client-Seiten-Instanz der Anwendung eine Aktualisierungsanfordererkomponente (210) umfasst, die eine hängende Anforderung einer Ereignisressource (212) an die zweite Datenverarbeitungsvorrichtung überträgt, wobei die Ereignisressource Daten umfasst, die Aktualisierungen von Ressourcen (202-204) betreffen, die von der zweiten Datenverarbeitungsvorrichtung gepflegt werden, und die hängende Anforderung eine globale Kennung für die Ereignisressource umfasst;
die Client-Seiten-Instanz der Anwendung weiterhin eine Empfängerkomponente (208) umfasst, die eine Antwort auf die hängende Anforderung empfängt, wobei die Antwort nicht die Aktualisierung umfasst, jedoch Metadaten auf der Basis der Daten umfasst, die in der Ereignisressource enthalten sind, wobei die Metadaten eine Angabe eines Typs der Aktualisierung und eine globale Kennung für die Ressource umfassen; und
die Client-Seiten-Instanz der Anwendung dazu konfiguriert ist, die Antwort zu analysieren, um mindestens eine der Aktualisierungen zu identifizieren, die von der zweiten Datenverarbeitungsvorrichtung abzurufen ist.

2. Datenverarbeitungsvorrichtung nach Anspruch 1, wobei die Client-Seiten-Instanz der Anwendung weiterhin eine Entscheiderkomponente (214) umfasst, die einen Abruftyp für die Aktualisierung auf der Basis von zumindest zum Teil von mindestens einer bzw. einem von einer Kapazität der Datenverarbeitungsvorrichtung, einer Dringlichkeit der Aktualisierung oder einem Netzwerkverkehrszustand bestimmt, wobei die Entscheiderkomponente bewirkt, dass die Aktualisierungsanfordererkomponente die hängende Anforderung auf der Basis des Abruftyps überträgt.

3. Datenverarbeitungsvorrichtung nach Anspruch 2, wobei der Typ der Aktualisierung eine von einer Hinzufügung der Ressource zu der zweiten Datenverarbeitungsvorrichtung, einer Modifizierung der Ressource oder einer Löschung der Ressource aus der zweiten Datenverarbeitungsvorrichtung ist.

4. Datenverarbeitungsvorrichtung nach Anspruch 1, wobei die Client-Seiten-Instanz der Anwendung weiterhin eine Anfordererkomponente umfasst, die eine Anforderung, einen asynchronen Betrieb durchzuführen, an die zweite Datenverarbeitungsvorrichtung unter Verwendung der API überträgt, wobei die Anforderung dazu konfiguriert ist zu bewirken, dass die zweite Datenverarbeitungsvorrichtung eine Betriebsressource auf der zweiten Datenverarbeitungsvorrichtung zu erzeugen, wobei die Betriebsressource dazu verwendbar ist, eine Ressource auf der zweiten Datenverarbeitungsvorrichtung auf der Basis von mindestens einem Schritt des asynchronen Betriebs zu aktualisieren, wobei die Betriebsressource weiterhin dazu verwendbar ist zu bewirken, dass die zweite Datenverarbeitungsvorrichtung eine Ereignisressource auf der zweiten Datenverarbeitungsvorrichtung zu aktualisieren.

5. Datenverarbeitungsvorrichtung nach Anspruch 1, wobei die asynchrone Echtzeit-Kommunikation mindestens einer bzw. eine von einem Datentransfer, einer elektronischen Nachricht, einer Ereignisplanungsanforderung, einer Gegenwartsangabe, einer Aktualisierung einer Kontaktliste oder einer Aktualisierung einer Gruppenliste ist.

6. Datenverarbeitungsvorrichtung nach Anspruch 1, wobei eine synchrone Echtzeit-Kommunikation mindestens einen bzw. eine von einem Videostream, einer Videokonferenz, einer Sprachkommunikation oder Daten, die Application-Sharing betreffen, umfasst.

7. Verfahren, das von einem Prozessormodul einer Datenverarbeitungsvorrichtung ausgeführt wird, wobei das Verfahren Folgendes umfasst:
Ausführen einer Client-Seiten-Instanz einer Anwendung, die eine asynchrone Echtzeit-Kommunikation zwischen der Datenverarbeitungsvorrichtung und einer zweiten Datenverarbeitungsvorrichtung mittels einer Anwendungsprogrammierschnittstelle ("Application Programming Interface", API) unterstützt, die mit einer Representational-State-Transfer-Architektur (REST-Architektur) konform ist; und
asynchrones Übertragen und Empfangen von Daten in Echtzeit mittels der Anwendung unter Verwendung der API;
**dadurch gekennzeichnet, dass**:
die Client-Seiten-Instanz der Anwendung auch eine synchrone Echtzeit-Kommunikation zwischen der Datenverarbeitungsvorrichtung und der zweiten Datenverarbeitungsvorrichtung unter Verwendung der API unterstützt, die mit der REST-Architektur konform ist;
das Verfahren weiterhin das asynchrone Übertragen und Empfangen von Daten in Echtzeit mittels der Anwendung unter Verwendung der API umfasst;
die Client-Seiten-Instanz der Anwendung eine Aktualisierungsanfordererkomponente umfasst, die eine hängende Anforderung einer Ereignisressource an die zweite Datenverarbeitungsvorrichtung überträgt, wobei die Ereignisressource Daten umfasst, die Aktualisierungen von Ressourcen betreffen, die von der zweiten Datenverarbeitungsvorrichtung gepflegt werden, und die hängende Anforderung eine globale Kennung für die Ereignisressource umfasst;
die Client-Seiten-Instanz der Anwendung weiterhin eine Empfängerkomponente umfasst, die eine Antwort auf die hängende Anforderung empfängt, wobei die Antwort nicht die Aktualisierung umfasst, jedoch Metadaten auf der Basis der Daten umfasst, die in der Ereignisressource enthalten sind, wobei die Metadaten eine Angabe eines Typs der Aktualisierung und eine globale Kennung für die Ressource umfassen; und
die Client-Seiten-Instanz der Anwendung dazu konfiguriert ist, die Antwort zu analysieren, um mindestens eine der Aktualisierungen zu identifizieren, die von der zweiten Datenverarbeitungsvorrichtung abzurufen ist.

## Revendications

1. Dispositif informatique (102) comprenant :
un module processeur (108) ; et
une mémoire (110) qui comprend une instance côté client d'une application (112), l'instance côté client de l'application étant exécutée par le module processeur, l'instance côté client de l'application supportant une communication asynchrone en temps réel entre le dispositif informatique et un deuxième dispositif informatique (104, 106) grâce à l'utilisation d'une interface de programmation d'application (API) qui est conforme à une architecture de transfert d'état représentatif (REST) ;
**caractérisé en ce que** :
l'instance côté client de l'application supporte également une communication synchrone en temps réel entre le dispositif informatique et le deuxième dispositif informatique grâce à l'utilisation de l'API conforme à l'architecture REST ;
l'instance côté client de l'application comprend un composant demandeur de mise à jour (210) qui transmet une demande en suspens au deuxième dispositif informatique pour une ressource d'événement (212), la ressource d'événement comprenant des données relatives à des mises à jour sur des ressources (202 à 204) maintenues par le deuxième dispositif informatique, et la demande en suspens comprenant un identifiant global pour la ressource d'événement ;
l'instance côté client de l'application comprend en outre un composant récepteur (208) qui reçoit une réponse à la demande en suspens, cas dans lequel la réponse ne comporte pas la mise à jour mais comporte des métadonnées basées sur les données incluses dans la ressource d'événement, les métadonnées comprenant une indication d'un type de la mise à jour et un identifiant global pour la ressource ; et
l'instance côté client de l'application est configurée de façon à analyser la réponse afin d'identifier au moins une des mises à jour à récupérer auprès du deuxième dispositif informatique.

2. Dispositif informatique selon la revendication 1, l'instance côté client de l'application comprenant en outre un composant décideur (214) qui détermine un type de récupération pour la mise à jour sur la base, au moins en partie, d'au moins un élément parmi une capacité du dispositif informatique, une urgence de la mise à jour, ou un état du trafic réseau, le composant décideur obligeant le composant demandeur de mise à jour à transmettre la demande en suspens sur la base du type de récupération.

3. Dispositif informatique selon la revendication 2, le type de la mise à jour étant un des éléments parmi une adjonction à la ressource sur le deuxième dispositif informatique, une modification de la ressource, ou une suppression de la ressource au niveau du deuxième dispositif informatique.

4. Dispositif informatique selon la revendication 1, l'instance côté client de l'application comprenant en outre un composant demandeur qui transmet une demande pour réaliser une opération asynchrone sur le deuxième dispositif informatique grâce à l'utilisation de l'API, cas dans lequel la demande est configurée de façon à obliger le deuxième dispositif informatique à créer une ressource d'opération sur le deuxième dispositif informatique, la ressource d'opération étant utilisable pour mettre à jour une ressource sur le deuxième dispositif informatique sur la base d'au moins une étape de l'opération asynchrone, la ressource d'opération étant utilisable en outre pour obliger le deuxième dispositif informatique à mettre à jour une ressource d'événement sur le deuxième dispositif informatique.

5. Dispositif informatique selon la revendication 1, la communication asynchrone en temps réel étant au moins un des éléments parmi un transfert de fichier, un message électronique, une demande d'ordonnancement d'événement, une indication de présence, une mise à jour sur une liste de contacts, ou une mise à jour sur une liste de groupes.

6. Dispositif informatique selon la revendication 1, une communication synchrone en temps réel comprenant au moins un des éléments parmi un flux vidéo, une vidéo-conférence, une communication vocale ou des données relatives à un partage d'une application.

7. Procédé exécuté par un module processeur d'un dispositif informatique, le procédé comprenant les opérations consistant à :
exécuter une instance côté client d'une application qui supporte une communication asynchrone en temps réel entre le dispositif informatique et un deuxième dispositif informatique au moyen d'une interface de programmation d'application (API) qui est conforme à une architecture de transfert d'état représentatif (REST) ; et
transmettre et recevoir de manière asynchrone des données en temps réel au moyen de l'application grâce à l'utilisation de ladite API ;
**caractérisé en ce que** :
l'instance côté client de l'application supporte également une communication synchrone en temps réel entre le dispositif informatique et le deuxième dispositif informatique grâce à l'utilisation de l'API conforme à l'architecture REST ;
le procédé comprend en outre la transmission et la réception de manière asynchrone de données en temps réel au moyen de l'application grâce à l'utilisation de ladite API ;
l'instance côté client de l'application comprend un composant demandeur de mise à jour qui transmet une demande en suspens au deuxième dispositif informatique pour une ressource d'événement, la ressource d'événement comprenant des données relatives à des mises à jour sur des ressources maintenues par le deuxième dispositif informatique, et la demande en suspens comprenant un identifiant global pour la ressource d'événement ;
l'instance côté client de l'application comprend en outre un composant récepteur qui reçoit une réponse à la demande en suspens, cas dans lequel la réponse ne comporte pas la mise à jour mais comporte des métadonnées basées sur les données incluses dans la ressource d'événement, les métadonnées comprenant une indication d'un type de la mise à jour et un identifiant global pour la ressource ; et
l'instance côté client de l'application est configurée de façon à analyser la réponse afin d'identifier au moins une des mises à jour à récupérer auprès du deuxième dispositif informatique.
